# FASCICULE DE BREVET EUROPEEN

(11) **EP 4 492 840 B1**
(45) Date de publication et mention de la délivrance du brevet: **15.10.2025**
(21) Numéro de dépôt: 24187667.1
(22) Date de dépôt: 10.07.2024
(51) Int. Cl.: H04W 12/06, H04L 9/40

(54) **PROCÉDÉ D' AUTHENTIFICATION AUTOMATIQUE DE PASSERELLE RÉSIDENTIELLE**
VERFAHREN ZUR AUTOMATISCHEN AUTHENTIFIZIERUNG EINES RESIDENTIAL GATEWAYS
METHOD FOR AUTOMATICALLY AUTHENTICATING A RESIDENTIAL GATEWAY

(30) Priorité: 11.07.2023 FR 2307445
(43) Date de publication de la demande: 15.01.2025
(73) Titulaire: SAGEMCOM BROADBAND SAS, 92270 Bois-Colombes (FR)
(72) Inventeur: KORBER, Nicolas, 92270 BOIS-COLOMBES (FR)
(74) Mandataire: Cabinet Le Guen Maillet

(56) Documents cités:
- EP-A1- 3 962 028
- WO-A1-2019/047197
- US-A1- 2007 022 469

## Description

### DOMAINE TECHNIQUE

La présente invention concerne l' authentification automatique multi-facteurs d'une passerelle résidentielle (« residential gateway » en anglais) offrant des services d'accès réseau large bande (« broadband access » en anglais) via un accès sans-fil fixe (FWA, pour « Fixed Wireless Access » en anglais).

### ETAT DE LA TECHNIQUE ANTERIEURE

Les technologies d'accès sans fil fixe (FWA) permettent aux opérateurs de réseau de fournir un accès réseau large bande ultra-rapide, sans avoir à déployer de structures réseau câblées ou fibrées, en s'appuyant sur les technologies de réseaux mobiles de dernières générations (4G, 5G...). Cela permet notamment de fournir des services d'accès réseau large bande dans des zones géographiques suburbaines et rurales où le déploiement de la fibre optique peut présenter une complexité élevée de déploiement et de maintenance.

Par ailleurs, de sorte à renforcer la sécurité d'accès à des services, il est aujourd'hui répandu d'utiliser de la double authentification, aussi appelée authentification à deux facteurs (2FA, pour « two-factor authentication » en anglais). Le service est rendu accessible à un utilisateur final après que celui-ci a présenté deux preuves d'identité distinctes à un mécanisme d'authentification.

Des authentifications de passerelles résidentielles fournissant un service sur un réseau à large bande sont connues et sont décrites par exemple dans les documents US2007/022469A1, EP3962028A1 et WO2019/047197A1.

Il est souhaitable de fournir une solution qui permette de renforcer l'authentification distante des passerelles résidentielles pour offrir à l'utilisateur final l'accès à certains services (e.g., accès Internet), sans toutefois nécessiter d'interaction avec l'utilisateur final.

### EXPOSE DE L'INVENTION

Il est proposé ici un procédé selon la revendication 1, une passerelle résidentielle selon la revendication 8, un produit programme d'ordinateur selon la revendication 9 et un support de stockage selon la revendication 10.

Ainsi, l'authentification distante de la passerelle résidentielle pour offrir à un utilisateur final l'accès à certains services (e.g., accès Internet) est renforcée, sans toutefois nécessiter d'interaction avec l'utilisateur final.

Des modes de réalisation particuliers sont définis dans les revendications dépendantes.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de communication ;
[Fig. 2] illustre schématiquement une interconnexion interne d'une passerelle résidentielle du système de communication ;
[Fig. 3] illustre schématiquement un agencement matériel utilisable dans la passerelle résidentielle ;
[Fig. 4] illustre schématiquement des chemins de communication logiques dans le système de communication ;
[Fig. 5] illustre schématiquement un algorithme d'authentification implémenté par la passerelle résidentielle, dans un mode de réalisation ;
[Fig. 6] illustre schématiquement des échanges intervenant dans le système de communication dans le cadre d'une authentification de la passerelle résidentielle, dans un mode de réalisation ; et
[Fig. 7] illustre schématiquement des échanges intervenant dans le système de communication dans le cadre d'une authentification de la passerelle résidentielle, dans un autre mode de réalisation.

### EXPOSE DETAILLE DE MODES DE REALISATION

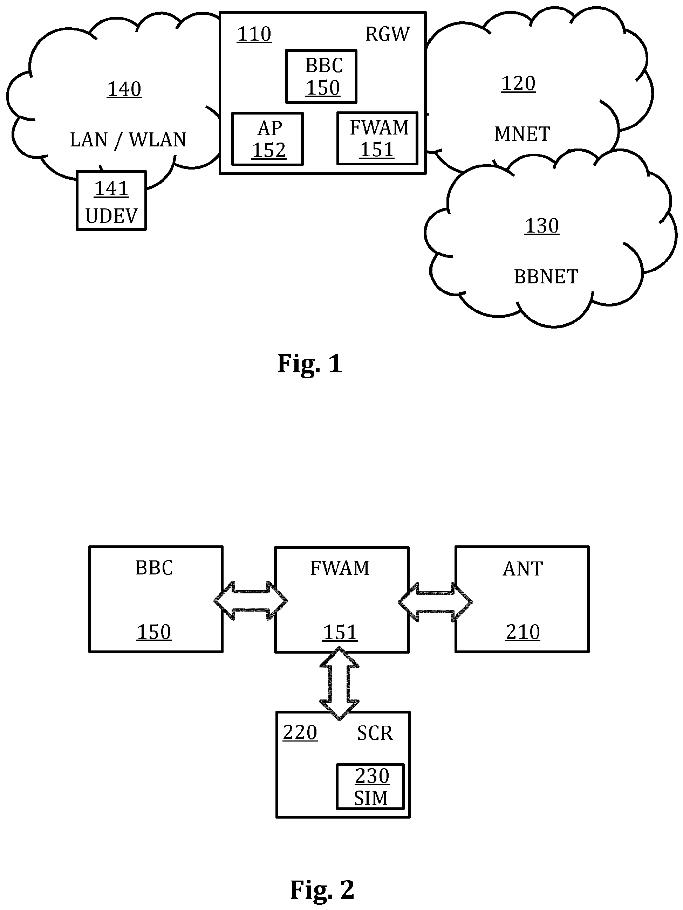

La Fig. 1 illustre ainsi schématiquement un système de communication comportant une passerelle résidentielle RGW 110.

La passerelle résidentielle RGW 110 implémente une technologie d'accès sans fil fixe (FWA). La passerelle résidentielle RGW 110 est considérée comme un équipement de type CPE (« Customer-Premises Equipment » en anglais) dans les technologies de type FWA.

La passerelle résidentielle RGW 110 est apte à fournir un ensemble de services à un utilisateur final, dont un service d'accès à un réseau large bande, également désigné par réseau haut débit ou réseau d'accès fixe, BBNET 130 par l'intermédiaire d'un réseau mobile MNET 120. Il est fait usage de manière équivalente des termes « réseau large bande », « réseau haut débit », « réseau d'accès fixe ».

La passerelle résidentielle RGW 110 comporte un modem FWAM 151 pour connecter la passerelle résidentielle RGW 110 au réseau mobile MNET 120 et un contrôleur large bande BBC 150 (ou contrôleur d'accès large bande) pour connecter la passerelle résidentielle RGW 110 au réseau large bande BBNET 130. Par les termes « contrôleur large bande », il également entendu un contrôleur d'accès au réseau large bande, ou de manière équivalente, un contrôleur d'accès au réseau haut débit.

La passerelle résidentielle RGW 110 comporte préférentiellement un gestionnaire d'interface LAN (« Local Area Network » en anglais), tel qu'un point d'accès AP 152 permettant de mettre en place un réseau de type WLAN (« Wireless LAN » en anglais), comme par exemple un réseau Wi-Fi. L'utilisateur peut ainsi profiter des services offerts par le réseau large bande BBNET 130 par le biais d'un terminal ou dispositif utilisateur UDEV 141 (tel qu'un ordinateur, une tablette électronique, un téléphone intelligent, un décodeur TV...).

La **Fig. 2** illustre schématiquement une interconnexion interne de la passerelle résidentielle RGW 110.

Le modem FWAM 151 est interconnecté avec le contrôleur BBC 150.

Le modem FWAM 151 est interconnecté avec un lecteur de carte SIM (« Subscriber Identity Module » en anglais) SCR 220 dans lequel peut être placée une carte SIM (« SIM card » en anglais) 230. En variante, le modem FWAM 151 peut être interconnecté avec une puce de type eSIM soudée sur une carte électronique de la passerelle résidentielle RGW 110 ou intégrée de manière logicielle et/ou matérielle dans la passerelle résidentielle RGW 110. Le modem FWAM 151 implémente une fonction d'équipement utilisateur UE (« User Equipment » en anglais) vis-à-vis du réseau mobile MNET 120, selon la terminologie employée dans les standards de réseaux de téléphonie mobile.

Le modem FWAM 151 est interconnecté avec un système antennaire ANT 210 permettant au modem FWAM 151 de communiquer avec des équipements du réseau mobile MNET 120.

Les interconnexions au sein de la passerelle résidentielle RGW 110 peuvent être réalisées grâce à des bus de communication, par exemple de type PCI (« Peripheral Component Interconnect » en anglais) ou USB (« Universal Serial bus » en anglais).

Pour permettre à la passerelle résidentielle RGW 110 de bénéficier des services du réseau mobile MNET 120, le modem FWAM 151 effectue une authentification de la carte SIM 230, ou de la puce eSIM, auprès du réseau mobile MNET 120, par exemple en échangeant avec un centre d'authentification AuC (« Authentication Center » en anglais) du réseau mobile MNET 120. Suite à cette authentification préalable de la carte SIM 230, ou la puce eSIM, le modem FWAM 151 détient une clé de chiffrement permettant que des communications soient réalisées par et avec la passerelle résidentielle RGW 110 dans le réseau mobile MNET 120. La passerelle résidentielle RGW 110 peut ainsi bénéficier des services du réseau mobile MNET 120. Un lien de communication opérationnel est alors établi entre la passerelle résidentielle RGW 110 et le cœur du réseau mobile MNET 120, et d'autres authentifications peuvent être alors réalisées pour permettre à la passerelle résidentielle RGW 110 de bénéficier des services du réseau large bande BBNET 130.

Le modem FWAM 151 et le contrôleur BBC 150 opèrent de manière autonome l'un de l'autre. Chacun possède ses propres ressources de traitement/calculs et de mémoire. Le modem FWAM 151 et le contrôleur BBC 150 peuvent être implémentés de manière logicielle sur un même processeur et être interconnectés par un bus logiciel. Le modem FWAM 151 et le contrôleur BBC 150 peuvent être en variante implémentés sur des processeurs distincts et être interconnectés par un bus matériel.

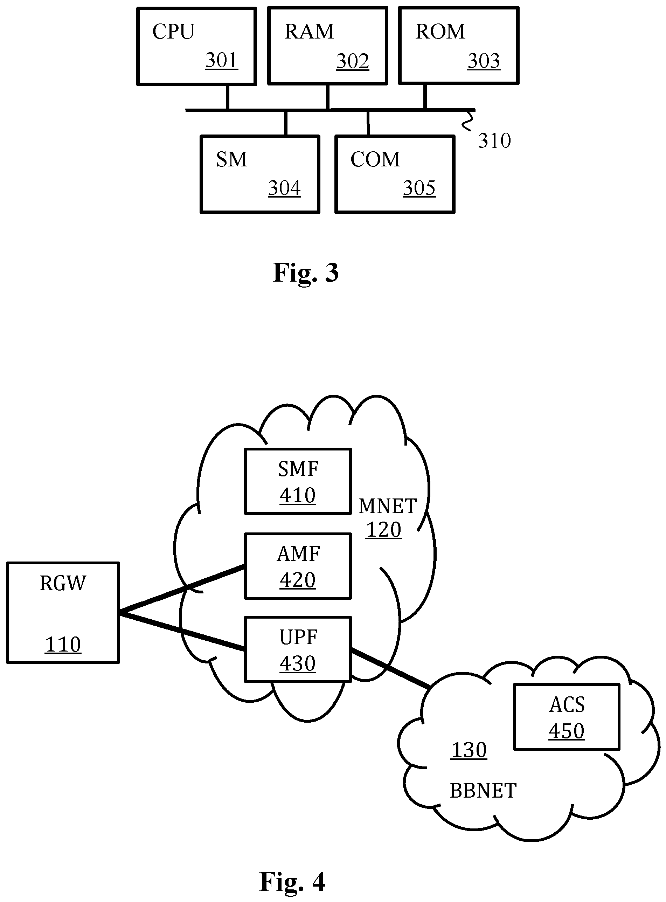

La **Fig. 3** illustre schématiquement un agencement matériel utilisable dans la passerelle résidentielle RGW 110, plus particulièrement pour implémenter le contrôleur BBC 150 et/ou le modem FWAM 151.

L'agencement matériel présenté comporte, reliés par un bus de communication 310 : un processeur ou CPU (« Central Processing Unit » en anglais) 301 ; une mémoire vive RAM (« Random-Access Memory » en anglais) 302 ; une mémoire non volatile, par exemple de type ROM (« Read Only Memory » en anglais) 303 ou EEPROM (« Electrically-Erasable Programmable ROM » en anglais), ou de type Flash ; une unité de stockage, telle qu'un support de stockage SM 304, par exemple un disque dur HDD, ou un lecteur de support de stockage, tel qu'un lecteur de cartes SD (« Secure Digital » en anglais) ; et un gestionnaire d'interfaces COM 305.

Le gestionnaire d'interfaces COM 305 permet à l'agencement matériel présenté d'interagir avec d'autres éléments de la passerelle résidentielle RGW 110, comme par exemple le lecteur de carte SIM SCR 220 ou le système antennaire ANT 210 ou le point d'accès AP 152.

Le processeur ou CPU 301 est capable d'exécuter des instructions chargées dans la mémoire vive 302, notamment à partir de la mémoire non volatile 303 ou du support de stockage SM (tel qu'une carte SD) 304. Lorsque l'agencement matériel présenté est mis sous tension, le processeur ou CPU 301 est ainsi capable de lire de la mémoire vive RAM 302 des instructions et de les exécuter. Ces instructions forment un programme d'ordinateur causant notamment l'implémentation, par le processeur ou CPU 301, des étapes et comportements décrits ici en relation avec le modem FWAM 151 et avec le contrôleur BBC 150, ou plus généralement de la passerelle résidentielle RGW 110.

Tout ou partie des étapes et comportements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, le modem FWAM 151 et le contrôleur BBC 150, et plus généralement la passerelle résidentielle RGW 110, comportent de la circuiterie électronique adaptée et configurée pour implémenter les étapes et comportements décrits ici.

La Fig. 4 illustre schématiquement des chemins de communication logiques dans le système de communication.

De manière illustrative, le réseau mobile MNET 120 est conforme aux standards de téléphonie mobile 5G.

Le réseau mobile MNET 120 comporte, outre une partie réseau d'accès radio RAN (« Radio Access Network » en anglais), une partie réseau cœur qui inclut divers équipements et/ou fonctions dont une entité SMF (« Session Management Function » en anglais) 410, une entité AMF (« Access and Mobility management Function » en anglais) 420 et une entité UPF (« User plane Function » en anglais) 430.

Comme son nom l'indique, l'entité UPF gère le plan utilisateur, aussi appelé plan de données (« Data Plane » en anglais), c'est-à-dire le transport du trafic utilisateur. Une liaison de plan utilisateur relie ainsi la passerelle résidentielle RGW 110 et l'entité UPF 430. Cette liaison de plan utilisateur est supportée par une interface typiquement notée NG-u entre la partie réseau accès radio et la partie réseau cœur.

Ainsi, en ce qui concerne la passerelle résidentielle RGW 110, les échanges réalisés entre la passerelle résidentielle RGW 110 et le réseau large bande BBNET 130 passent par l'entité UPF 430 dans le réseau mobile MNET 120. En d'autres termes, les échanges via le réseau mobile MNET 120 qui impliquent le contrôleur BBC 150 passent par la liaison de plan utilisateur avec l'entité UPF 430, y compris des échanges d'authentification de la passerelle résidentielle RGW 110 auprès d'un serveur de configuration automatique ACS (« Auto Configuration Server » en anglais) 450 du réseau large bande BBNET 130. Pour échanger avec le serveur de configuration automatique ACS 450, le contrôleur BBC 150 implémente typiquement un daimôn (« daemon » en anglais) selon le protocole TR-069 (« CPE WAN Management Protocol », édité par le Broadband Forum).

Les échanges de données utilisateur qui impliquent le modem FWAM 151, tels que des échanges par messages SMS (« Short Message Service » en anglais), passent par la liaison de plan utilisateur avec l'entité UPF 430.

Pour permettre la mise en place des liaisons de plan utilisateur dans le réseau mobile MNET 120, l'entité SMF 410 et l'entité AMF 420 coopèrent dans l'implémentation du plan de contrôle (« Control Plane » en anglais) du réseau mobile MNET 120. Une liaison de plan contrôle relie ainsi la passerelle résidentielle RGW 110 et l'entité AMF 420. Cette liaison de plan de contrôle est supportée par une interface typiquement notée NG-c entre la partie réseau accès radio et la partie réseau cœur.

Ainsi, en ce qui concerne la passerelle résidentielle RGW 110, les échanges de signalisation réalisés entre la passerelle résidentielle RGW 110 et le réseau mobile MNET 120 passent par l'entité AMF 420 dans le réseau mobile MNET 120. En d'autres termes, cette liaison de plan de contrôle est réservée au modem FWAM 151 dans la passerelle résidentielle RGW 110 et n'est pas accessible par le contrôleur BBC 150.

Il ressort de ce qui précède que le modem FWAM 151 n'interagit pas avec le réseau large bande BBNET 130 et le contrôleur BBC 150 n'interagit pas avec le réseau mobile MNET 120. A titre d'exemple illustratif, cela implique qu'un provisionnement d'adresse IP (« Internet Protocol » en anglais) pour le contrôleur BBC 150 est réalisé auprès d'un serveur DHCP (« Dynamic Host Configuration Protocol » en anglais) localisé dans le réseau large bande BBNET 130, et un provisionnement d'adresse IP pour le modem FWAM 151 est quant à lui réalisé auprès de l'entité SMF 410 localisée dans le réseau mobile MNET 120.

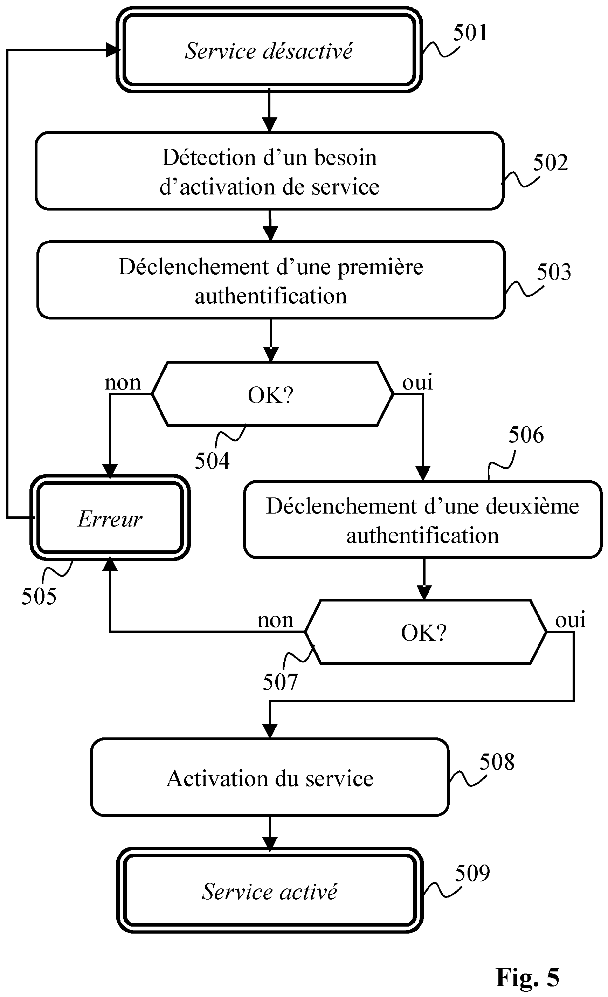

La **Fig. 5** illustre schématiquement un algorithme d'authentification implémenté par la passerelle résidentielle RGW 110, dans un mode de réalisation. L'algorithme d'authentification permet à la passerelle résidentielle RGW 110 de décider d'activer, ou pas, un service. Dans un mode de réalisation préféré, le service est un service d'accès à des services offerts par le réseau large bande BBNET 130. De manière plus particulière, le service peut être un établissement de liaison de plan utilisateur entre le contrôleur BBC 150 et le réseau large bande BBNET 130. Le service peut aussi être la mise en place du réseau local LAN ou WLAN.

Dans un état 501, le service est désactivé. Le lien de communication avec le réseau mobile MNET 120 est opérationnel, ce qui implique que l'authentification préalable susmentionnée a été réalisée. Ainsi, les liaisons de plan utilisateur et de plan de contrôle susmentionnées ont été mises en place.

Dans une étape 502, la passerelle résidentielle RGW 110 détecte un besoin d'activation du service. Par exemple, le besoin d'activation du service est détecté lorsque la passerelle résidentielle RGW 110 a terminé une phase d'initialisation au démarrage ou après un redémarrage.

Dans une étape 503, la passerelle résidentielle RGW 110 déclenche une première authentification auprès du réseau large bande BBNET 130. La première authentification est par exemple une authentification basée sur des certificats s'appuyant sur un protocole d'échanges de type « poignée de main » (« handshake » en anglais).

Dans une étape 504, la passerelle résidentielle RGW 110 vérifie que la première authentification a été couronnée de succès. Si tel est le cas, une étape 506 est effectuée ; sinon, la passerelle résidentielle RGW 110 passe dans un état d'erreur 505. Par exemple, un signal lumineux et/ou sonore est activé par la passerelle résidentielle RGW 110.

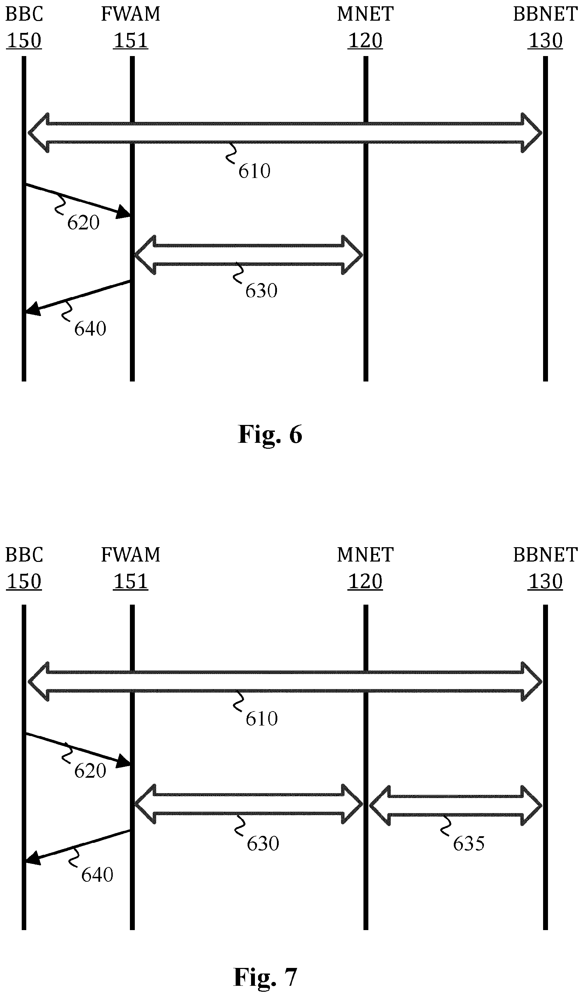

Dans l'étape 506, la passerelle résidentielle RGW 110 déclenche une deuxième authentification auprès du réseau mobile MNET 120. La deuxième authentification est réalisée via le plan utilisateur du réseau mobile MNET 120 (i.e., le lien de communication entre la passerelle résidentielle RGW 110 et la partie réseau cœur du réseau mobile MNET 120 est opérationnel). La deuxième authentification est par exemple la transmission par la passerelle résidentielle RGW 110 d'une chaîne de caractère prédéterminée associée à la passerelle résidentielle RGW 110, tel qu'un secret connu de la passerelle résidentielle RGW 110 et de la partie réseau cœur du réseau mobile MNET 120 (voir Fig. 6) ou un secret connu de la passerelle résidentielle RGW 110 et du réseau large bande BBNET 130 (voir Fig. 7).

Il convient de noter que la deuxième authentification est différente de l'authentification préalable précédemment évoquée, puisque ladite authentification préalable permet de rendre opérationnel un lien de communication entre la passerelle résidentielle RGW 110 et le réseau mobile MNET 120, alors que ce lien de communication doit être opérationnel pour pouvoir réaliser la deuxième authentification.

Dans une étape 507, la passerelle résidentielle RGW 110 vérifie que la deuxième authentification a été couronnée de succès. Si tel est le cas, une étape 508 est effectuée ; sinon, la passerelle résidentielle RGW 110 passe dans l'état d'erreur 505. Par exemple, un signal lumineux et/ou sonore est activé par la passerelle résidentielle RGW 110.

Dans l'étape 508, la passerelle résidentielle RGW 110 active le service, et passe dans un état 509 où le service est activé. Ainsi, l'activation du service a pu être réalisée par une double-authentification, de manière automatique, sans intervention de l'utilisateur.

Dans un mode de réalisation particulier, la deuxième authentification (auprès du réseau mobile MNET 120) est ordonnée au modem FWAM 151 par le contrôleur BBC 150.

La première authentification est présentée ci-dessus comme étant réalisée auprès du réseau large bande BBNET 130 et la deuxième authentification comme étant réalisée auprès du réseau mobile MNET 120. En variante, la première authentification est réalisée auprès du réseau mobile MNET 120 et la deuxième authentification est réalisée auprès du réseau large bande BBNET 130. Les première et deuxième authentifications peuvent aussi en variante être réalisées en parallèle.

Dans un mode de réalisation particulier, les première et deuxième authentifications ont une durée de vie, et devront être réitérées une fois cette durée de vie écoulée. Pour surveiller cet aspect, dans l'état 509, le contrôleur BBC 150 déclenche une temporisation de durée égale à la durée de vie en question. Lorsque la temporisation expire, la passerelle résidentielle RGW 110 repasse dans l'état 501, et les première et deuxième authentifications doivent être renouvelées.

La **Fig. 6** illustre schématiquement des échanges intervenant dans le système de communication dans le cadre d'une authentification de la passerelle résidentielle RGW 110, dans un mode de réalisation.

La Fig. 6 montre des échanges 610 de première authentification entre le contrôleur BBC 150 et un équipement du réseau large bande BBNET 130 (voir par exemple la Fig.5, en particulier l'étape 503), typiquement le serveur de configuration automatique ACS 450. Ces échanges transitent par le plan utilisateur du réseau mobile MNET 120 (lien de communication opérationnel grâce à l'authentification préalable).

Lorsque la première authentification s'est terminée avec succès, le contrôleur BBC 150 envoie une instruction 620 au modem FWAM 151 de déclencher la deuxième authentification. Prennent alors place des échanges 630 de deuxième authentification entre le modem FWA 151 et un équipement du réseau mobile MNET 120 (voir par exemple la Fig. 5, en particulier l'étape 506).

Lorsque la deuxième authentification s'est terminée avec succès, le modem FWAM 151 envoie une information correspondante 640 au contrôleur BBC 150, qui peut alors activer le service (voir Fig. 5). Si la deuxième authentification se termine par un échec d'authentification, le modem FWAM 151 en informe le contrôleur BBC 150, qui décide alors de ne pas activer le service (voir Fig. 5).

La **Fig. 7** illustre schématiquement des échanges intervenant dans le système de communication dans le cadre d'une authentification de la passerelle résidentielle RGW 110, dans un autre mode de réalisation.

La Fig. 7 montre aussi les échanges 610 de première authentification, ainsi que l'envoi de l'instruction 620 de déclencher la deuxième authentification et les échanges 630 de deuxième authentification.

La Fig. 7 diffère de la Fig. 6 en ce que, dans le cadre des échanges 630 de deuxième authentification, l'équipement du réseau mobile MNET 120 effectue des échanges avec un équipement du réseau large bande BBNET 130, typiquement le serveur de configuration automatique ACS 450. L'équipement du réseau mobile MNET 120 ne sert alors que d'intermédiaire entre le réseau large bande BBNET 130 et le modem FWA 151 (qui n'est pas configuré pour communiquer avec des équipements du réseau large bande BBNET 130), et délègue ainsi la prise en charge de la deuxième authentification au réseau large bande BBNET 130.

Lorsque la deuxième authentification s'est terminée avec succès (ici sur décision de l'équipement du réseau large bande BBNET 130), le modem FWAM 151 envoie une information correspondante 640 au contrôleur BBC 150, qui peut alors activer le service (voir Fig. 5). Si la deuxième authentification se termine par un échec d'authentification (ici sur décision de l'équipement du réseau large bande BBNET 130), le modem FWAM 151 en informe le contrôleur BBC 150, qui décide alors de ne pas activer le service (voir Fig. 5).

Dans un mode de réalisation particulier, le modem FWAM 151 initie la deuxième authentification en formattant un message SMS dédié destiné à un numéro de téléphone dédié. Préférentiellement, ce message SMS contient dans le corps dudit message SMS une chaîne de caractère prédéterminée associée à la passerelle résidentielle RGW 110, telle qu'un identifiant de la passerelle résidentielle RGW 110. Ainsi, outre le numéro de téléphone source du message SMS (relié à la carte SIM ou à la puce eSIM), ce message SMS peut contenir un numéro de série, ou une identité IMEI (« International Mobile Equipment Identity » en anglais), ou une clef unique attribuée à la passerelle résidentielle RGW 110. Ce message SMS est envoyé par la passerelle résidentielle RGW 110 sans interaction avec l'utilisateur, et ce message SMS n'ayant pas vocation à être lu par l'utilisateur, la passerelle résidentielle l'efface sans le conserver dans la carte SIM ou en mémoire du modem FWAM 151. On parle de message SMS de service ou de message SMS silencieux. La partie réseau cœur du réseau mobile MNET 120, via un centre de messagerie SMSC (« Short Message Service Center » en anglais) reçoit ce message SMS de service et le traite, ou échange avec un équipement du réseau large bande BBNET 130, pour réaliser la deuxième authentification.

## Revendications

1. Procédé d'activation de service par une passerelle résidentielle (110), la passerelle résidentielle (110) implémentant une technologie d'accès sans fil fixe FWA et comportant de la circuiterie électronique implémentant un modem (151) pour connecter la passerelle résidentielle (110) à un réseau mobile (120) via lequel un réseau large bande (130) est accessible et un contrôleur large bande (150) pour connecter la passerelle résidentielle (110) au réseau large bande (130) via le réseau mobile (120),
le procédé comportant une authentification préalable de la passerelle résidentielle (110) auprès du réseau mobile (120) via un plan de contrôle, de sorte à rendre opérationnel un lien de communication entre la passerelle résidentielle (110) et le réseau mobile (120) via un plan utilisateur du réseau mobile (120) par lequel la passerelle résidentielle (110) communique avec le réseau large bande (130), le procédé comportant en outre une première authentification (503) et
une deuxième authentification (506) parmi lesquelles :
- une authentification, par le contrôleur large bande (150), de la passerelle résidentielle (110) auprès du réseau large bande (130) ; et
- une authentification, par le modem (151), de la passerelle résidentielle (110) auprès du réseau mobile (120) via le plan utilisateur du réseau mobile (120), une fois le lien de communication entre la passerelle résidentielle (110) et le réseau mobile (120) rendu opérationnel par ladite authentification préalable de la passerelle résidentielle (110) auprès du réseau mobile (120) ;
la passerelle résidentielle (110) activant le service lorsque la première authentification (503) et la deuxième authentification (506) ont été effectuées avec succès.

2. Procédé selon la revendication 1, dans lequel le contrôleur large bande (150) instruit le modem (151) de déclencher l'authentification de la passerelle résidentielle (110) auprès du réseau mobile (120) via le plan utilisateur du réseau mobile (120).

3. Procédé selon la revendication 1 ou 2, dans lequel la deuxième authentification (506) est déclenchée après que la première authentification (503) a été réalisée avec succès.

4. Procédé selon l'une quelconque des revendications 1 à 3, dans lequel le service est un service d'accès à des services du réseau large bande (130).

5. Procédé selon l'une quelconque des revendications 1 à 4, dans lequel l'authentification, par le modem (151), de la passerelle résidentielle (110) auprès du réseau mobile (120) via le plan utilisateur du réseau mobile (120) inclut un envoi de message de type SMS par la passerelle résidentielle (110).

6. Procédé selon la revendication 5, dans lequel le message de type SMS contient, dans le corps dudit message SMS, une chaîne de caractère prédéterminée associée à la passerelle résidentielle (110).

7. Procédé selon l'une quelconque des revendications 1 à 6, dans lequel pendant l'authentification, par le modem, de la passerelle résidentielle auprès du réseau mobile via le plan utilisateur du réseau mobile, le réseau mobile délègue ladite authentification au réseau large bande.

8. Passerelle résidentielle (110) implémentant une technologie d'accès sans fil fixe FWA et comportant de la circuiterie électronique configurée pour implémenter un modem (151) pour connecter la passerelle résidentielle (110) à un réseau mobile (120) via lequel un réseau large bande (130) est accessible et un contrôleur large bande (150) pour connecter la passerelle résidentielle (110) au réseau large bande (130) via le réseau mobile (120),
la circuiterie électronique étant configurée pour réaliser une authentification préalable de la passerelle résidentielle (110) auprès du réseau mobile (120) via un plan de contrôle, de sorte à rendre opérationnel un lien de communication entre la passerelle résidentielle (110) et le réseau mobile (120) via un plan utilisateur du réseau mobile (120) par lequel la passerelle résidentielle (110) communique avec le réseau large bande (130), la circuiterie électronique étant configurée en outre pour réaliser une première authentification (503) et une deuxième authentification (506) parmi lesquelles :
- une authentification, par le contrôleur large bande (150), de la passerelle résidentielle (110) auprès du réseau large bande (130) ; et
- une authentification, par le modem (151), de la passerelle résidentielle (110) auprès du réseau mobile (120) via le plan utilisateur du réseau mobile (120), une fois le lien de communication entre la passerelle résidentielle (110) et le réseau mobile (120) rendu opérationnel par ladite authentification préalable de la passerelle résidentielle (110) auprès du réseau mobile (120) ;
la circuiterie électronique étant configurée pour activer le service lorsque la première authentification (503) et la deuxième authentification (506) ont été effectuées avec succès.

9. Produit programme d'ordinateur comportant des instructions de code de programme causant une implémentation du procédé selon l'une quelconque des revendications 1 à 6, lorsque lesdites instructions sont exécutées par un processeur.

10. Support de stockage d'informations stockant des instructions de code de programme causant une implémentation du procédé selon l'une quelconque des revendications 1 à 6, lorsque lesdites instructions sont lues et exécutées par un processeur.

## Patentansprüche

1. Verfahren zur Aktivierung eines Dienstes durch einen Residential Gateway (110), wobei der Residential Gateway (110) eine Technologie für festen drahtlosen Zugang, FWA, implementiert und eine elektronische Schaltung aufweist, die ein Modem (151) zum Verbinden des Residential Gateways (110) mit einem Mobilnetz (120), über welches ein Breitbandnetz (130) zugänglich ist, und eine Breitbandsteuerung (150) zum Verbinden des Residential Gateways (110) mit dem Breitbandnetz (130) über das Mobilnetz (120) implementiert,
wobei das Verfahren eine vorhergehende Authentifizierung des Residential Gateways (110) beim Mobilnetz (120) über eine Steuerungsebene aufweist, um eine Kommunikationsverbindung zwischen dem Residential Gateway (110) und dem Mobilnetz (120) über eine Benutzerebene des Mobilnetzes (120) betriebsbereit zu machen, über welche der Residential Gateway (110) mit dem Breitbandnetz (130) kommuniziert,
wobei das Verfahren ferner eine erste Authentifizierung (503) und eine zweite Authentifizierung (506) aufweist, darunter:
- eine Authentifizierung des Residential Gateways (110) beim Breitbandnetz (130) durch die Breitbandsteuerung (150); und
- eine Authentifizierung des Residential Gateways (110) beim Mobilnetz (120) durch das Modem (151) über die Benutzerebene des Mobilnetzes (120), sobald die Kommunikationsverbindung zwischen dem Residential Gateway (110) und dem Mobilnetz (120) durch die vorhergehende Authentifizierung des Residential Gateways (110) beim Mobilnetz (120) betriebsbereit gemacht wurde;
wobei der Residential Gateway (110) den Dienst aktiviert, wenn die erste Authentifizierung (503) und die zweite Authentifizierung (506) erfolgreich durchgeführt wurden.

2. Verfahren nach Anspruch 1, wobei die Breitbandsteuerung (150) das Modem (151) anweist, die Authentifizierung des Residential Gateways (110) beim Mobilnetz (120) über die Benutzerebene des Mobilnetzes (120) auszulösen.

3. Verfahren nach Anspruch 1 oder 2, wobei die zweite Authentifizierung (506) ausgelöst wird, nachdem die erste Authentifizierung (503) erfolgreich durchgeführt wurde.

4. Verfahren nach einem der Ansprüche 1 bis 3, wobei der Dienst ein Dienst für Zugang zu Diensten des Breitbandnetzes (130) ist.

5. Verfahren nach einem der Ansprüche 1 bis 4, wobei die Authentifizierung des Residential Gateways (110) beim Mobilnetz (120) durch das Modem (151) über die Benutzerebene des Mobilnetzes (120) ein Senden einer Nachricht vom Typ SMS durch den Residential Gateway (110) aufweist.

6. Verfahren nach Anspruch 5, wobei die Nachricht vom Typ SMS im Textkörper der SMS-Nachricht eine vorbestimmte Zeichenkette aufweist, die dem Residential Gateway (110) zugeordnet ist.

7. Verfahren nach einem der Ansprüche 1 bis 6, wobei während der Authentifizierung des Residential Gateways beim Mobilnetz durch das Modem über die Benutzerebene des Mobilnetzes das Mobilnetz die Authentifizierung an das Breitbandnetz delegiert.

8. Residential Gateway (110), der eine Technologie für festen drahtlosen Zugang, FWA, implementiert und eine elektronische Schaltung aufweist, die dazu ausgebildet ist, ein Modem (151) zum Verbinden des Residential Gateways (110) mit einem Mobilnetz (120), über welches ein Breitbandnetz (130) zugänglich ist, und eine Breitbandsteuerung (150) zum Verbinden des Residential Gateways (110) mit dem Breitbandnetz (130) über das Mobilnetz (120) zu implementieren,
wobei die elektronische Schaltung dazu ausgebildet ist, eine vorhergehende Authentifizierung des Residential Gateways (110) beim Mobilnetz (120) über eine Steuerungsebene durchzuführen, um eine Kommunikationsverbindung zwischen dem Residential Gateway (110) und dem Mobilnetz (120) über eine Benutzerebene des Mobilnetzes (120) betriebsbereit zu machen, über welche der Residential Gateway (110) mit dem Breitbandnetz (130) kommuniziert,
wobei die elektronische Schaltung ferner dazu ausgebildet ist, eine erste Authentifizierung (503) und eine zweite Authentifizierung (506) durchzuführen, darunter:
- eine Authentifizierung des Residential Gateways (110) beim Breitbandnetz (130) durch die Breitbandsteuerung (150); und
- eine Authentifizierung des Residential Gateways (110) beim Mobilnetz (120) durch das Modem (151) über die Benutzerebene des Mobilnetzes (120), sobald die Kommunikationsverbindung zwischen dem Residential Gateway (110) und dem Mobilnetz (120) durch die vorhergehende Authentifizierung des Residential Gateways (110) beim Mobilnetz (120) betriebsbereit gemacht wurde;
wobei die elektronische Schaltung dazu ausgebildet ist, den Dienst zu aktivieren, wenn die erste Authentifizierung (503) und die zweite Authentifizierung (506) erfolgreich durchgeführt wurden.

9. Computerprogrammprodukt, das Programmcode-Anweisungen aufweist, die eine Implementierung des Verfahrens nach einem der Ansprüche 1 bis 6 bewirken, wenn die Anweisungen von einem Prozessor ausgeführt werden.

10. Informationsspeichermedium, das Programmcode-Anweisungen speichert, die eine Implementierung des Verfahrens nach einem der Ansprüche 1 bis 6 bewirken, wenn die Anweisungen von einem Prozessor gelesen und ausgeführt werden.

## Claims

1. Method for activating a service by a residential gateway (110), the residential gateway (110) implementing a fixed wireless access FWA technology and comprising electronic circuitry implementing a modem (151) for connecting the residential gateway (110) to a mobile network (120) via which a broadband network (130) is accessible and a broadband controller (150) for connecting the residential gateway (110) to the broadband network (130) via the mobile network (120),
the method comprises a prior authentication of the residential gateway (110) with the mobile network (120) via a control plane, so as to make a communication link operational between the residential gateway (110) and the mobile network (120) via a user plane of the mobile network (120) by which the residential gateway (110) communicates with the broadband network (130),
the method further comprising a first authentication (503) and a second authentication (506) including:
- an authentication, by the broadband controller (150), of the residential gateway (110) with the broadband network (130); and
- an authentication, by the modem (151), of the residential gateway (110) with the mobile network (120) via the user plane of the mobile network (120), once the communication link between the residential gateway (110) and the mobile network (120) has been made operational by said prior authentication of the residential gateway (110) with the mobile network (120);
the residential gateway (110) activating the service when the first authentication (503) and the second authentication (506) have been implemented successfully.

2. Method according to claim 1, wherein the broadband controller (150) instructs the modem (151) to trigger the authentication of the residential gateway (110) with the mobile network (120) via the user plane of the mobile network (120).

3. Method according to claim 1 or 2, wherein the second authentication (506) is triggered after the first authentication (503) has been implemented successfully.

4. Method according to any one of claims 1 to 3, wherein the service is a service of access to services of the broadband network (130).

5. Method according to any one of claims 1 to 4, wherein the authentication, by the modem (151), of the residential gateway (110) with the mobile network (120) via the user plane of the mobile network (120), includes a sending of an SMS message by the residential gateway (110).

6. Method according to claim 5, wherein the SMS message contains, in the body of said SMS message, a predetermined character string associated with the residential gateway (110).

7. Method according to any one of claims 1 to 6, wherein, during the authentication, by the modem, of the residential gateway with the mobile network via the user plane of the mobile network, the mobile network delegates said authentication to the broadband network.

8. Residential gateway (110) implementing a fixed wireless access FWA technology and comprising electronic circuitry configured to implement a modem (151) for connecting the residential gateway (110) to a mobile network (120) via which a broadband network (130) is accessible and a broadband controller (150) for connecting the residential gateway (110) to the broadband network (130) via the mobile network (120),
the electronic circuitry being configured to implement a prior authentication of the residential gateway (110) with the mobile network (120) via a control plane, so as to make a communication link operational between the residential gateway (110) and the mobile network (120) via a user plane of the mobile network (120) by which the residential gateway (110) communicates with the broadband network (130),
the electronic circuitry being furthermore configured to implement a first authentication (503) and a second authentication (506) including:
- an authentication, by the broadband controller (150), of the residential gateway (110) with the broadband network (130); and
- an authentication, by the modem (151), of the residential gateway (110) with the mobile network (120) via the user plane of the mobile network (120), once the communication link between the residential gateway (110) and the mobile network (120) has been made operational by said prior authentication of the residential gateway (110) with the mobile network (120);
the electronic circuitry being configured to activate the service when the first authentication (503) and the second authentication (506) have been implemented successfully.

9. Computer program product comprising program code instructions causing an implementation of the method according to any one of claims 1 to 6, when said instructions are executed by a processor.

10. Information storage medium storing program code instructions causing an implementation of the method according to any one of claims 1 to 6, when said instructions are read and executed by a processor.
